# EUROPEAN PATENT APPLICATION

(11) **EP 1 229 547 A2**
(43) Date of publication of application: **07.08.2002**
(21) Application number: 02250741.2
(22) Date of filing: 04.02.2002
(51) Int. Cl.: G11B 27/28, G06F 17/30

(54) **System and method for thematically analyzing and annotating an audio-visual sequence**

(30) Priority: 02.02.2001 US 266010 P
(71) Applicant: Ensequence, Inc., Portland, Oregin 97204 (US)
(72) Inventor: Wallace, Michael W., Vancouver, Washington 98683 (US); Acott, Troy Steven, Beaverton, Oregon 97007 (US); Miller, Eric Brent, Beaverton, Oregon 97007 (US); Monday, Stacy Anne, Vancouver, Washington 98684 (US)
(74) Representative: Nicholls, Michael John

(57) **Abstract**

This disclosure describes a method and system for creating an annotated analysis of the thematic content of a film or video work. The annotations may refer to single frames, or to sequences of consecutive frames. The sequences of frames for a given theme may overlap with one or more single frame or sequence of frames from one or more other themes in the work.

## Description

### BACKGROUND OF THE INVENTION

The present invention relates to the processing of movie or video material, more specifically to the manual, semi-automatic, or automatic annotation of thematically-based events and sequences within the material.

As initially conceived, movies and television programs were intended to be viewed as linear, sequential time experiences, that is, they ran from beginning to end, in accordance to the intent of the creator of the piece and at the pacing determined during the editing of the work. However, under some circumstances a viewer may wish to avoid a linear viewing experience. For example, the viewer may wish only a synopsis of the work, or may wish to browse, index, search, or catalog all or a portion of a work.

With the advent of recording devices and personal entertainment systems, control over pacing and presentation order fell more and more to the viewer. The video cassette recorder (VCR) provided primitive functionality including pause, rewind, fast forward and fast reverse, thus enabling simple control over the flow of time in the experience of the work. However, the level of control was necessarily crude and limited. With the advent of laser discs, the level of control moved to frame-accurate cuing, thus increasing the flexibility of the viewing experience. However, no simple indexing scheme was available to permit the viewer to locate and view only specific segments of the video on demand.

Modern computer technology has enabled storage of and random access to digitized film and video sources. The DVD has brought compressed digitized movies into the hands of the viewer, and has provided a simple level of access, namely chapter-based browsing and viewing.

Standard movie and film editing technology is based on the notion of a 'shot', which is defined as a single series of images which constitutes an entity within the story line of the work. Shots are by definition non-overlapping, contiguous elements. A 'scene' is made up of one or more shots, and a complete movie or video work comprises a plurality of scenes.

Video analysis for database indexing, archiving and retrieval has also advanced in recent years. Algorithms and systems have been developed for automatic scene analysis, including feature recognition; motion detection; fade, cut, and dissolve detection; and voice recognition. However, these analysis tools are based upon the notion of a shot or sequence, one of a series of non-overlapping series of images that form the second level constituents of a work, just above the single frame. For display and analysis purposes, a work is often depicted as a tree structure, wherein the work is subdivided into discrete sequences, each of which may be further subdivided. Each sequence at the leaf positions of such a tree is disjoint from all other leaf nodes. When working interactively with such a structure, each node may be represented by a representative frame from the sequence, and algorithms exist for automatically extracting key frames from a sequence.

Whereas this method of analyzing, annotating and depicting a film or video work is useful, it exhibits a fundamental limitation inherent in the definition of a 'shot'. Suppose for a moment that a shot consisted of a single frame. If more than one object appears in that frame, then the frame can be thought of as having at least two thematic elements, but the content of the shot is limited to a singular descriptor. This limitation may be avoided by creating a multiplicity of shots, each of which contains a unique combination of objects or thematic elements, then giving each a unique descriptor. However, such an approach becomes completely intractable for all but the most degenerate plot structures.

The intricate interplay between content and themes has long been recognized in written literature, and automated and semi-automated algorithms and systems have appeared to perform thematic analysis and classification of audible or machine-readable text. A single chapter, paragraph or sentence may advance or contribute multiple themes, so often no clear distinction or relationship can be inferred or defined between specific subdivisions of the text and overlying themes or motifs of the work. Themes supercede the syntactic subdivisions of the text, and must be described and annotated as often-concurrent parallel elements that are elucidated throughout the text.

Some elements of prior art have attempted to perform this type of analysis on video sequences. Abecassis, in a series of patents, perfected the notion of 'categories' as a method of analysis, and described the use of "video content preferences" which refer to "preestablished and clearly defined preferences as to the manner or form (e.g. explicitness) in which a story/game is presented, and the absence of undesirable matter (e.g. profanity) in the story/game" (U.S. Patent 5,434,678; see also U.S. 5,589,945, U.S. 5,664,046, U.S. 5,684,918, U.S. 5,696,869, U.S. 5,724,472, U.S. 5,987,211, U.S. 6,011,895, U.S. 6,067,401, and U.S. 6,072,934.) Abecassis further extends the notion of "video content preferences" to include "types of programs/games (e.g. interactive video detective games), or broad subject matter (e.g. mysteries)." Inherent in Abecassis' art is the notion that the content categories can be defined exclusive of the thematic content of the film or video, and that a viewer can predefine a series of choices along these predefined categories with which to filter the content of the work. Abecassis does not take into account the plot or thematic elements that make up the work, but rather focuses on the manner or form in which these elements are presented.

In a more comprehensive approach to the subject, Benson et al. (U.S. Patent 5,574, 845) describe a system for describing and viewing video data based upon models of the video sequence, including time, space, object and event, the event model being most similar to the subject of the current disclosure. In '845, the event model is defined as a sequence of possibly-overlapping episodes, each of which is characterized by elements from time and space models which also describe the video, and objects from the object model of the video. However, this description of the video is a strictly structural one, in that the models of the video developed in '845 do not take into account the syntactic, semantic, or semiotic content or significance of the 'events' depicted in the video. In a similar way, Benson et al. permit overlapping events, but this overlap is strictly of the form "Event A contains one or more of Event B", whereas thematic segmentation can and will produce overlapping segments in all general relationships.

The automatic assignment of thematic significance to video segments is beyond the capability of current computer systems. Methods exist in the art for detecting scene cuts, fades and dissolves; for detecting and analyzing camera and object motion in video sequences; for detecting and tracking objects in a series of images; for detecting and reading text within images; and for making sophisticated analyses and transformations of video images. However, the assignment of contextual meaning to any of this data must presently be done, or at least be augmented, by the intervention of an expert who groups simpler elements of analysis like key frames and shots, and assigns meaning and significance to them in terms of the themes or concepts which the work exposits.

What is required is a method of thematically analyzing and annotating the linear time sequence of a film or video work, where thematic elements can exist in parallel with one another, and where the occurrence of one thematic element can overlap the occurrence of another thematic element.

### SUMMARY OF THE INVENTION

This disclosure describes a method and system for creating an annotated analysis of the thematic content of a film or video work. The annotations may refer to single frames, or to sequences of consecutive frames. The sequences of frames for a given theme may overlap with one or more single frame or sequence of frames from one or more other themes in the work.

### BRIEF DESCRIPTION OF THE DRAWINGS

FIG 1 illustrates a video sequence timeline with annotations appended according to a preferred embodiment of the invention.
FIG. 2 is a schematic view of the video sequence timeline of FIG. 1 with the sequence expressed as a linear sequence of frames.
FIG. 3 is a schematic view of one frame of the video sequence of FIG. 2.
FIG. 4 is a schematic view of a magnified view of the portion of the frame of FIG. 3.
FIG. 5 is a flow diagram illustrating the preferred method for retrieving and displaying a desired video sequence from compressed video data.
FIG. 6 is a schematic diagram of nested menus from a graphic user interface according to the invention to enable selection of appropriate video segments from the entire video sequence by the user of the system.

### DETAILED DESCRIPTION

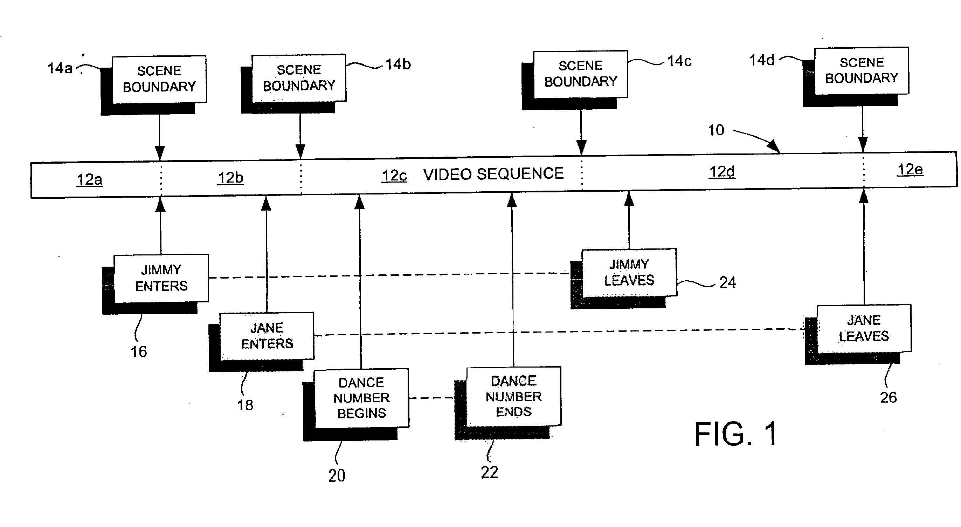

The high level description of the current invention refers to the timeline description of a video sequence 10, which is shown schematically in FIG. 1. Any series of video images may be labeled with annotations that designate scenes 12a-12e, scene boundaries 14a-14d (shown by the dotted lines), key frames, presence of objects or persons, and other similar structural, logical, functional, or thematic descriptions. Here, objective elements such as the appearance of two characters (Jimmy and Jane) within the video frame and their participation within a dance number are shown as blocks which are associated with certain portions of the video sequence 10.

The dashed lines linking the blocks serve to highlight the association between pairs of events, which might be assigned thematic significance. In this short example, Jimmy enters the field of view at the beginning of a scene in block 16. Later in the same scene, Jane enters in block 18. A scene change 14b occurs, but Jimmy and Jane are still in view. They begin to dance together starting from block 20, and dance for a short period until block 22. After a brief interval, the scene changes again at 14c, and shortly thereafter Jimmy leaves the camera's view in block 24. Some time later the scene changes again at 14d, and Jane has now left the camera's view in block 26.

FIG. 1 demonstrates the potentially overlapping nature of thematic elements, their disjuncture from simple scene boundaries 14l-14d, and the necessary overlay of meaning and significance on the mere 'events' that is required for thematic analysis. The expert who performs the analysis will address questions such as, "How is the dance number in this portion of the work related to other actions, objects, and persons in other portions of the work?" From a series of such questions, annotations are created which engender contextual and analytical meaning to individual frames and series of frames within the video.

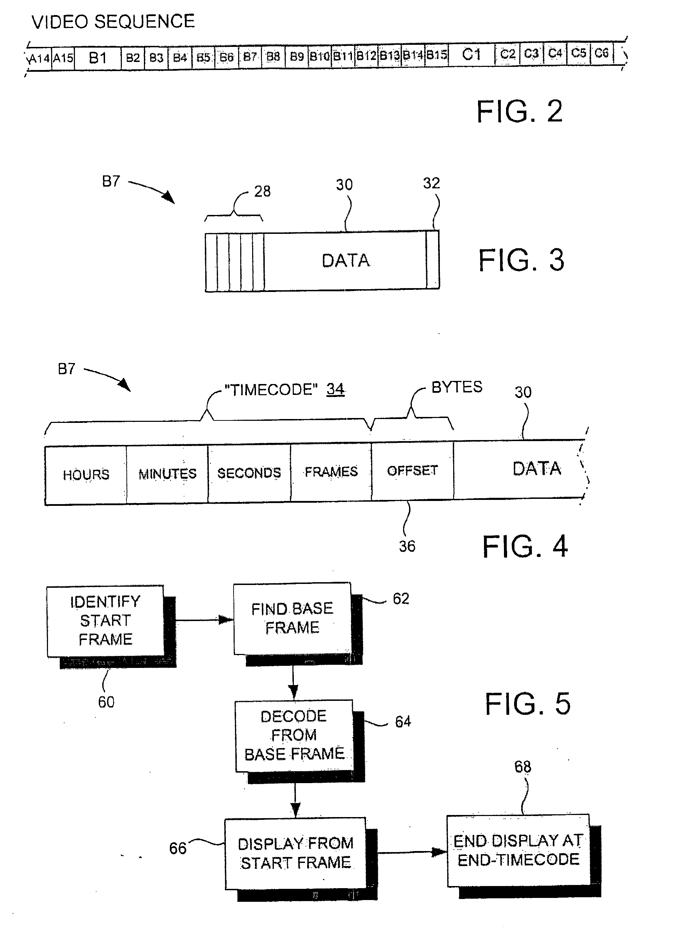

The processing of generating annotations for a film or video work proceeds as follows. If the work is compressed, as for example using MPEG-2 compression, it is decompressed. An example of a compressed portion of a video sequence is shown in FIG. 2. The sequence shown is comprised of a series of frames that are intended to be shown sequentially on a timeline. Standard video is shot at thirty frames per second and, at least in the case of compressed video such as MPEG-2, includes approximately two base frames ("I-frames") per second of video shot to form two sets of fifteen frame Group-of-Picture (GOP) segments. The MPEG-2 standard operates to compress video data by storing changes in subsequent frames from previous frames. Thus, one would normally be unable to completely and accurately decompress a random frame using the MPEG-2 standard without knowing the context of surrounding frames. Base frames, such as base frames B1 and C1, are complete in and of themselves and thus can be decompressed without referring to previous frames. Each base frame is associated with subsequent regular frames - for instance, frame B1 is related to frames B2-B15 to present a complete half-second of video.

Once decompressed, the expert viewer of the list or user of the interactive tool then can view, create, edit, annotate, or delete these attributes assigned to certain frames of the video. In addition, higher-level attributes can be added to the annotation list. Each such thematic attribute receives a text label, which describes the content of the attribute. As thematic attributes are created and labeled, they are assigned to classes or sets, each of which represents one on-going analytical feature of the work. For example, each appearance of a particular actor may be labeled and assigned to the plotline involving the actor. Additionally, a subset of those appearances may be grouped together into a different thematic set, as representative of the development of a particular idea or motif in the work. Appearances of multiple actors may be grouped, and combined with objects seen within the work. The combinations of attributes which can be created are limited only by the skill, imagination and understanding of the expert performing the annotation.

Automatic or semi-automatic analysis tools might be used to determine first level attributes of the film, such as scene boundaries 14; the presence of actors, either generally or by specific identity; the presence of specific objects; the occurrence of decipherable text in the video images; zoom or pan camera movements; motion analysis; or other algorithmically-derivable attributes of the video images. These attributes are then presented for visual inspection, either by means of a list of the attributes, or preferentially by means of an interactive computer tool that shows various types and levels of attributes, possibly along with a timeline of the video and with key frames associated with the corresponding attribute annotations.

The annotations form a metadata description of the content of the work. As with other metadata like the Dublin Core (http://purl.org/dc), these metadata can be stored separate from the work itself, and utilized in isolation from or in combination with the work. The metadata annotation of the work might be utilized by an interactive viewing system that can present the viewer with alternative choices of viewing the work.

The annotation metadata takes two forms. The low-level annotation consists of a type indicator, start time, duration or stop time, and a pointer to a label string. The type indicator may refer to a person, event, object, text, or other similar structural element. The start and stop times may be given in absolute terms using the timing labels of the original work, or in relative values from the beginning of the work, or any other convenient reference point. Labeling is done by indirection to facilitate the production of alternative-language versions of the metadata.

In the preferred implementation, the work is compressed using the MPEG-2 video compression standard after the annotation work is completed, and care is taken to align Group-of-Picture (GOP) segments with significant key frames in the annotation, to facilitate the search and display process. Preferentially, each key frame is encoded as an MPEG I-frame, which may be at the beginning of a GOP (as in frame B1 and C1 in FIG. 2), so that the key frame can be searched to and displayed efficiently when the metadata is being used for viewing or scanning the work. In this case, the compression processing necessitates an additional step required to connect frame time with file position within the video sequence data stream. The nature of the MPEG-2 compression standard is such that elapsed time in a work is not linearly related to file position within the resulting data stream. Thus, an index must be created to convert between frame time, which is typically given in SMPTE time code format 'hh:mm:ss:ff' 34 (FIG. 4), with stream position, which is a byte/bit offset into the raw data stream. This index may be utilized by converting the annotation start time values to stream offsets, or by maintaining a separate temporal index that relates SMPTE start time to offset.

The second-level thematic annotations utilize the first-level structural annotations. Each thematic annotation consists of a type indicator, a pointer to a label, and a pointer to the first of a linked list of elements, each of which is a reference to either a first-level annotation, or another thematic annotation. The type indicators can either be generic, such as action sequence, dance number, or song; or be specific to the particular work, such as actor- or actress-specific, or a particular plot thread. All thematic indicators within a given work are unique. The element references may be by element type and start time, or by direct positional reference within the metadata file itself.

Every frame of the work must appear in at least one thematic element. This permits the viewer to select all themes, and view the entire work.

The second-level thematic annotations may be organized into a hierarchy. This hierarchy may be inferred from the relationships among the annotations themselves, or indicated directly by means of a number or labeling scheme. For example, annotations with type indicators within a certain range might represent parent elements to those annotations within another certain range, and so forth. Such a hierarchy of structure is created during the generation of the annotation data, and is used during the display of the metadata or the underlying work.

The metadata are stored in a structured file, which may itself be compressed by any of a number of standard technologies to make storage and transmission more efficient.

The time representation may be in fractional seconds or by other means, rather than SMPTE frame times.

FIGs. 3 and 4 illustrates the data structure within a sample frame such as frame B7. The frame B7 includes a header 28, a data portion 30, and a footer 32. The data portion 30 includes the video data used (in conjunction with data derived from previous decompressed frames) to display the frame and all the objects presented within it. The header 28 uniquely identifies the frame by including a timecode portion 34, which sets forth the absolute time of play within the video sequence and the frame number. The header 28 also includes an offset portion 36 that identifies in bytes the location of the closest previous I-frame B1 so that the base frame can be consulted by the decoder and the identified frame B7 subsequently accurately decompressed.

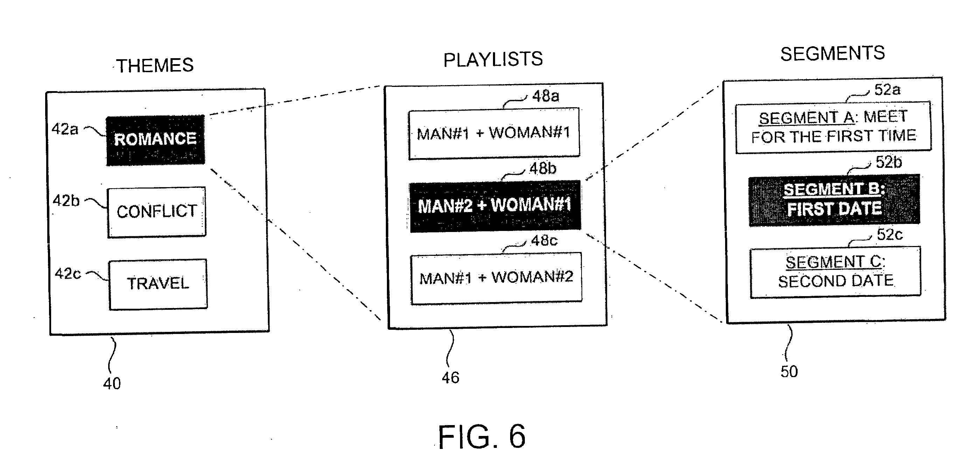

The decoding procedure operates as shown in flow diagram of FIG. 5. The user is presented with a choice of themes or events within the video sequence. As shown in FIG. 6, for instance, the user may select the desired portion of the video by first moving through a series of graphic user interface menu lists displayed on the video monitor on which the user is to view the video. A theme list is presented in menu display 40 comprised of, for instance, the themes of romance, conflict, and travel - each identified and selectable by navigating between labeled buttons 42a, 42b, and 42c, respectively. The selected theme will include a playlist, stored in memory, associated with that theme. Here, the 'romance' theme is selected by activating button 42a and playlist submenu 46 is displayed to the user. The playlist submenu 46 lists the video segment groupings associated with the theme selected in menu 40. Here, the playlist for romance includes the following permutations: 'man#1 with woman#1' at labeled button 48a, 'man#2 with woman#1' at labeled button 48b, and 'man#1 with woman #2' at button 48c. Further selection of a playlist, such as selection of playlist 48b, yields the presentation to the user of a segment list in segment submenu 50. The segment submenu 50 has listed thereon a plurality of segments 52a, 52b, and 52c appropriate to the theme and playlist.

Creating the annotation list occurs in reverse, where the video technical creating the annotative metadata selects segments of the video sequence being annotated - each segment including a begin and end frame - and associates an annotation with that segment. Object annotations can be automatically derived, such as by a character recognition program or other known means, or manually input after thematic analysis of the underlying events and context of the video segment to the entire work. Annotations can be grouped in nested menu structures, such as shown in FIG. 6, to ease the selection and placement of annotated video segments within the playback tree structure.

The selected segment in FIG. 6, here segment 52b showing the first date between man#2 and woman#1 under the romance theme, begins at some start time and ends at some end time which are associated with a particular portion of the video sequence from a particular start frame to an end frame. In the flow diagram shown in FIG. 5, the start frame for the selected video segment is identified in block 60 by consulting the lookup table; and the base frame location derived from it in block 62 as by reading the offset existing in the start frame. The decoder then starts decoding from the identified base frame in block 64 but only starts displaying the segment from the start frame in block 66. The display of the segment is ended in block 68 when the frame having the appropriate timecode 34 is decoded and displayed.

Referring back to FIG. 2, for instance, supposing a short (e.g. half second) segment is selected for view by the user, the system looks up the location of the frames associated with the segment within a table. In this case, the segment starts with frame B4 and ends with segment C6. The decoder reads the offset of frame B4 to identify the base I-frame B1 and begins decoding from that point. The display system, however, does not display any frame until B4 and stops at frame C6. Play of the segment is then complete and the user is prompted to select another segment for play by the user interface shown in FIG. 6.

These concepts can be extended to nonlinear time sequences, such as multimedia presentations, where at least some portion of the presentation consists of linear material. This applies also to audio streams, video previews, advertising segments, animation sequences, stepwise transactions, or any process that requires a temporally sequential series of events that may be classified on a thematic basis.

Having described and illustrated the principles of the invention in a preferred embodiment thereof, it should be apparent that the invention can be modified in arrangement and detail without departing from such principles. We claim all modifications and variation coming within the spirit and scope of the following claims.

## Claims

1. A method for generating annotations of viewable segments within a video sequence comprising the steps of:
selecting a start frame from a video sequence;
selecting an end frame from a video sequence to form in conjunction with the selected start frame a designated video segment;
associating an attribute with the designated video segment; and
storing the attribute as metadata within a lookup table for subsequent selection and presentation of the designated video segment to a viewer.

2. The method of claim 1, further including the step of automatically annotating scene division metadata within the lookup table.

3. The method of claim 1, further including the step of annotating a video segment responsive to an automated object recognition sytem.

4. The method of claim 3, wherein the objects automatically recognized by the system include a first-level attribute selected from the group consisting of scene boundaries, the presence of actors, the presence of specific objects, the occurrence of decipherable text in the video images, zoom or pan camera movements, or motion analysis.

5. The method of claim 1, further including the steps of:
selecting a second start frame from a video sequence;
selecting a second end frame from a video sequence to form in conjunction with the selected second start frame a second designated video segment, wherein said second designated video segment at least partially overlaps with said designated video segment;
associating a second attribute with the second designated video segment; and
storing the second attribute as metadata within the lookup table for subsequent selection and presentation of the second designated video segment to a viewer.

6. The method of claim 1 wherein said annotation includes a plurality of elements including a structural element and a thematic element.

7. The method of claim 1, wherein said metadata includes a low-level annotation comprising a type indicator, start time, duration or stop time, and a pointer to a label string.

8. The method of claim 7 wherein the type indicator refers to a one selected from the group consisting at least from a person, event, object, or text.

9. The method of claim 7 wherein the start and stop times are given in absolute terms.

10. The method of claim 7 wherein the start and stop times are given in relative terms to a reference point within the video sequence.

11. The method of claim 7, wherein said metadata includes a second-level annotation comprising a type indicator, a pointer to a label, and a pointer to a first of a linked list of elements.

12. The method of claim 1, further including the steps of:
presenting for visual inspection a list of the attributes contemporaneous with a timeline of the video sequence;
selecting at least one attribute from the list; and
performing the associating step responsive to the step of selecting at least one attribute from the list.
